# FASCICULE DE BREVET EUROPEEN

(11) **EP 3 994 341 B1**
(45) Date de publication et mention de la délivrance du brevet: **18.12.2024**
(21) Numéro de dépôt: 20742344.3
(22) Date de dépôt: 16.06.2020
(51) Int. Cl.: F01D 25/16, F16C 27/04

(54) **DISPOSITIF D'AMORTISSEMENT D'UN PALIER À ROULEMENT, COMPRENANT UN SUPPORT RIGIDE TRAVERSANT UNE CAGE SOUPLE**
VORRICHTUNG ZUR DÄMPFUNG EINES WÄLZLAGERS MIT EINEM DURCH EINEN FLEXIBLEN KÄFIG GEFÜHRTEN STARREN TRÄGER
DEVICE FOR DAMPING A ROLLING BEARING, COMPRISING A RIGID SUPPORT PASSING THROUGH A FLEXIBLE CAGE

(30) Priorité: 02.07.2019 FR 1907306
(43) Date de publication de la demande: 11.05.2022
(73) Titulaire: SAFRAN AIRCRAFT ENGINES, 75015 Paris (FR)
(72) Inventeur: PLONA, Daniel Georges, 77550 MOISSY-CRAMAYEL (FR)
(74) Mandataire: Brevalex
(86) Numéro de dépôt international: PCT/FR2020/051030
(87) Numéro de publication internationale: WO 2021/001610

(56) Documents cités:
- EP-A2- 2 149 681
- EP-A2- 2 538 036
- FR-A1- 2 951 232
- US-A1- 2008 152 483

## Description

### Domaine technique

L'invention se rapporte au domaine des paliers à roulement pour guider en rotation un arbre tel qu'un arbre de turbomachine d'aéronef.

L'invention concerne en particulier le domaine des paliers à roulement avec amortissement par film de fluide comprimé.

### État de la technique antérieure

L'amortissement d'un roulement par film de fluide comprimé est une technique bien connue dans le domaine des turbomachines et notamment dans le domaine aéronautique. Le document EP 2 538 036 B1 décrit un palier à roulement équipé d'un tel dispositif d'amortissement. En référence à la figure 2 de ce document, ce dispositif comprend une cage 44 et un support rigide 64 formant radialement entre eux une cavité d'amortissement fluidique 50 apte à former un film circonférentiel de fluide comprimé. La cage 44 comprend une bague 48 montée sur la bague externe 52 du roulement ainsi que des colonnettes 46 radialement déformables de manière à autoriser un déplacement radial de la bague 48 et donc du roulement par rapport au support rigide 64.

Les dispositifs d'amortissement connus dans l'état de la technique antérieure sont relativement encombrants. Par exemple, le dispositif d'amortissement décrit dans le document EP 2 538 036 B1 présente une dimension axiale près de trois fois supérieure à la dimension axiale du roulement. Un autre exemple est décrit dans le document FR 2 951 232.

### Exposé de l'invention

La présente invention vise à procurer un dispositif d'amortissement d'un palier à roulement présentant à la fois de bonnes performances d'amortissement et un encombrement limité, de manière à permettre son intégration dans un espace étroit, par exemple au sein d'un boîtier d'entraînement interne d'un système d'entraînement d'accessoires d'un ensemble propulsif d'aéronef.

A cet effet, l'invention a pour objet un dispositif d'amortissement d'un palier à roulement, ce dispositif comprenant un support annulaire et une cage s'étendant axialement suivant un axe de révolution, cette cage comprenant :
- un anneau de fixation,
- une bague configurée pour être montée sur la périphérie du roulement ou pour former une bague externe du roulement,
- des colonnettes reliant la bague à l'anneau de fixation, ces colonnettes s'étendant obliquement par rapport audit axe de révolution et étant circonférentiellement espacées les unes des autres de sorte que, pour chaque paire de colonnettes circonférentiellement contiguës, ces colonnettes définissent entre elles une ouverture intercolonnette.

La bague et le support annulaire forment radialement entre eux une cavité d'amortissement fluidique apte à former un film circonférentiel de fluide comprimé.

Selon l'invention, le support annulaire comprend une pluralité de dents s'étendant chacune radialement au travers d'une ouverture intercolonnette respective de la cage. De plus, le support annulaire comprend une couronne dentée et une pièce de fixation, la couronne dentée portant lesdites dents et délimitant ladite cavité d'amortissement fluidique, la pièce de fixation étant fixée à la couronne dentée.

Une telle imbrication de la cage et du support annulaire permet de réduire l'encombrement du dispositif d'amortissement par rapport aux dispositifs d'amortissement connus dans l'état de la technique antérieure. En effet, l'invention permet de disposer toutes les parties du support annulaire dans les espaces libres de la cage, en l'occurrence les espaces intercolonnettes, de sorte que le support annulaire présente des dimensions axiales et/ou radiales identiques ou inférieures aux dimensions axiales et/ou radiales de la cage, la dimension axiale de la cage et en particulier de la bague pouvant être sensiblement identique à celle du roulement.

Dans le présent document, le terme « oblique » désigne une orientation non parallèle et non perpendiculaire par rapport à une direction ou un axe de référence. Ainsi, les colonnettes s'étendent à la fois axialement et radialement par rapport audit axe de révolution.

De préférence, chaque colonnette de la cage peut comprendre une première extrémité reliée à une première extrémité axiale de la bague et une deuxième extrémité reliée à l'anneau de fixation et située axialement au droit d'une deuxième extrémité axiale de la bague.

Dans un mode de réalisation, la pièce de fixation du support annulaire peut être en appui contre l'anneau de fixation de la cage.

Cela permet de relier la cage et le support annulaire à un bâti à l'aide de moyens de fixation communs et, par ailleurs, de réduire l'encombrement radial du dispositif.

Dans un mode de réalisation, la pièce de fixation du support annulaire peut comprendre des pattes étant chacune en appui contre une dent respective de la couronne dentée.

Dans un mode de réalisation, la bague peut comprendre une face radialement externe comprenant deux gorges circonférentielles axialement espacées l'une par rapport à l'autre, cette face radialement externe comprenant une portion de contact fluidique délimitée axialement par les deux gorges circonférentielles et deux portions d'appui chacune étant délimitée axialement par l'une de ces gorges circonférentielles. Le support annulaire peut comprendre une face radialement interne ayant deux extrémités axiales respectivement en appui sur lesdites portions d'appui de la face radialement externe de la bague, cette face radialement interne comprenant une portion de contact fluidique axialement entre les portions d'appui de cette face. Ladite cavité d'amortissement fluidique peut être délimitée radialement par les portions de contact fluidique respectives de la bague et du support annulaire, et axialement par lesdites gorges circonférentielles de la bague.

L'invention a aussi pour objet un palier comprenant un dispositif tel que défini ci-dessus.

Selon une première variante, ce palier peut comprendre un roulement à billes ou à rouleaux, la bague de la cage étant configurée pour être montée sur une bague externe de ce roulement.

Selon une deuxième variante, ce palier peut comprendre une bague interne et des éléments roulants tels que des billes ou des rouleaux, la bague de la cage formant une bague externe constituant avec la bague interne et les éléments roulants un roulement.

L'invention a aussi pour objet une turbomachine.

De préférence, cette turbomachine est une turbomachine d'aéronef, pouvant comprendre un système d'entraînement d'accessoires, ce système d'entraînement d'accessoires comprenant un dispositif de prélèvement de puissance d'un arbre de la turbomachine, ce dispositif de prélèvement de puissance comprenant un palier tel que défini ci-dessus.

L'invention a aussi pour objet un procédé d'assemblage d'un dispositif tel que défini ci-dessus, selon un mode de réalisation dans lequel le support annulaire comprend une couronne dentée et une pièce de fixation, ce procédé comprenant :
- une étape d'emboîtement de la couronne dentée sur la bague par translation axiale de la couronne dentée par rapport à la bague de manière à insérer chaque dent de la couronne dentée dans une ouverture intercolonnette respective de la cage ;
- une étape de fixation de la pièce de fixation à la couronne dentée.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un turboréacteur à double flux comprenant un système d'entraînement d'accessoires ;
[Fig. 2] est une vue schématique en coupe axiale d'un système d'entraînement d'accessoires pour turbomachine d'aéronef, ce système comprenant un boîtier d'entraînement interne équipé d'un palier à roulement pour guider en rotation un arbre de la turbomachine ;
[Fig. 3] est une vue schématique partielle en perspective d'un dispositif d'amortissement de palier à roulement selon un premier mode de réalisation conforme à l'invention, ce dispositif comprenant une cage et un support annulaire comportant une couronne dentée et une pièce de fixation, la cage étant configurée pour être montée sur une bague externe du roulement ;
[Fig. 4] est une vue schématique partielle en perspective de la cage et de la couronne dentée du dispositif de la figure 3 ;
[Fig. 5] est une vue schématique partielle en perspective de la cage du dispositif de la figure 3 ;
[Fig. 6] est une vue schématique partielle en perspective d'un dispositif d'amortissement de palier à roulement selon un deuxième mode de réalisation conforme à l'invention, ce dispositif comprenant une cage et un support annulaire comportant une couronne dentée et une pièce de fixation, la cage formant une bague externe du roulement.

### Description détaillée de modes de réalisation

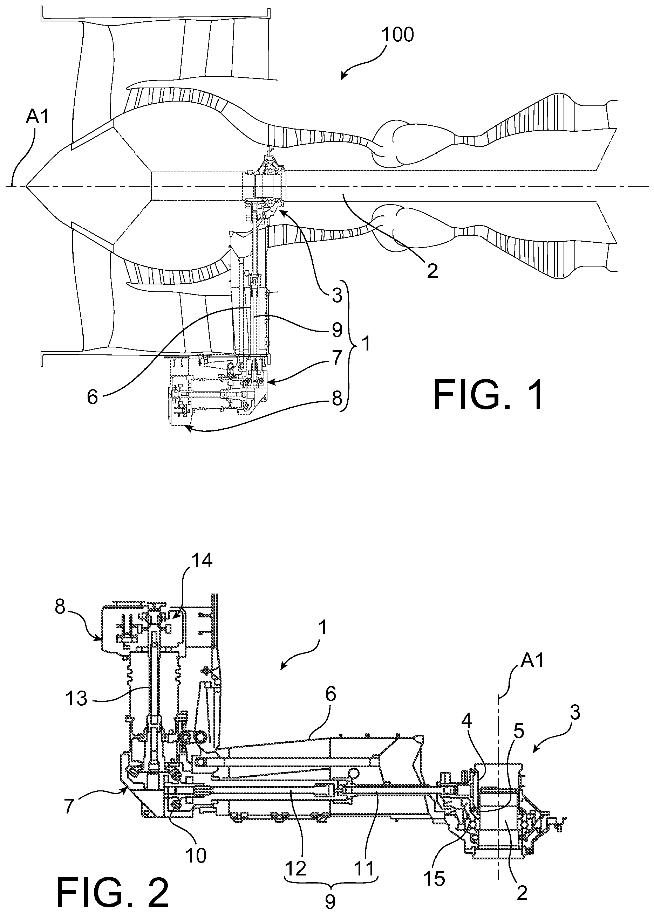

La figure 1 montre un turboréacteur 100 à double flux et double corps conventionnel.

Le turboréacteur 100 comprenant un système d'entraînement d'accessoires 1, également connu sous la dénomination « Accessory Drive Train » (ADT).

Un système d'entraînement d'accessoires 1 est représenté isolément à la figure 2.

De manière connue en soi, une partie de l'énergie générée par le turboréacteur 100 est prélevée pour alimenter différents accessoires alimentant ce turboréacteur ainsi que des équipements de l'aéronef.

Ce prélèvement s'effectue généralement mécaniquement sur un arbre 2 de corps haute pression du turboréacteur.

Pour ce faire, le système d'entraînement d'accessoires 1 comporte typiquement un boîtier d'entraînement interne 3, également connu sous la dénomination « Internal Gear Box ». Ce boîtier 3 abrite un engrenage 4 entraîné par un pignon 5 solidaire de l'arbre 2 du turboréacteur, et forme ainsi un dispositif de prélèvement de puissance.

Typiquement, le système d'entraînement d'accessoires 1 comprend des boîtiers 7 et 8 ainsi qu'un mécanisme de transmission configurés pour transmettre l'énergie mécanique ainsi prélevée aux accessoires et équipements.

Le mécanisme de transmission comprend un arbre 9 reliant l'engrenage 4 du boîtier d'entraînement interne 3 à un couple conique 10 logé dans le boîtier 7 de manière à entraîner les pignons de ce couple conique 10 en rotation autour de leur axe respectif. Le boîtier7 forme un boîtier de renvoi d'angle également connu sous la dénomination « Transfert Gear Box ».

L'arbre 9 est dans cet exemple réalisé en deux portions 11 et 12 qui s'étendent dans un bras 6 d'un carter intermédiaire du turboréacteur destiné à s'étendre au travers de la veine secondaire du turboréacteur.

Le mécanisme de transmission comprend aussi un arbre 13 reliant le couple conique 10 à un engrenage 14 logé dans le boîtier 8 qui forme un boîtier d'entraînement d'accessoires, également connu sous la dénomination « Accessory Gear Box » (AGB). Dans cet exemple, l'arbre 13 s'étend parallèlement à l'axe longitudinal A1 du turboréacteur 100.

Le boîtier d'entraînement d'accessoires 8 supporte habituellement différents accessoires, par exemple un générateur, un démarreur, un alternateur, une pompe hydraulique, un groupe de lubrification moteur, etc. De tels accessoires peuvent ainsi être entraînés par l'engrenage 14 auquel est transmise la puissance mécanique prélevée sur l'arbre 2 du turboréacteur 100.

Le guidage en rotation de l'arbre 2 de corps haute pression, autour de l'axe A1, est typiquement assuré par un palier à roulement 15 logé dans le boîtier d'entraînement interne 3 (voir figure 2).

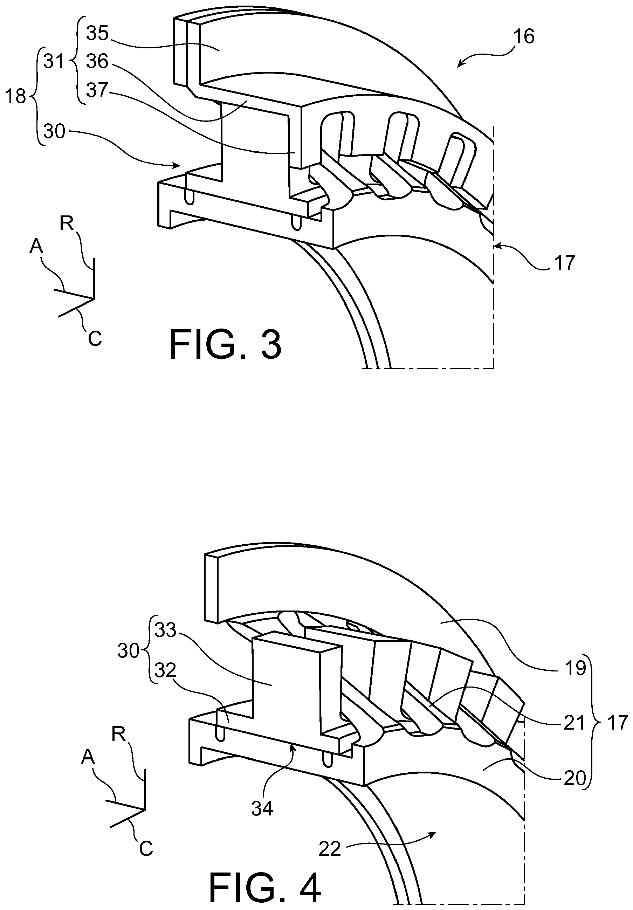

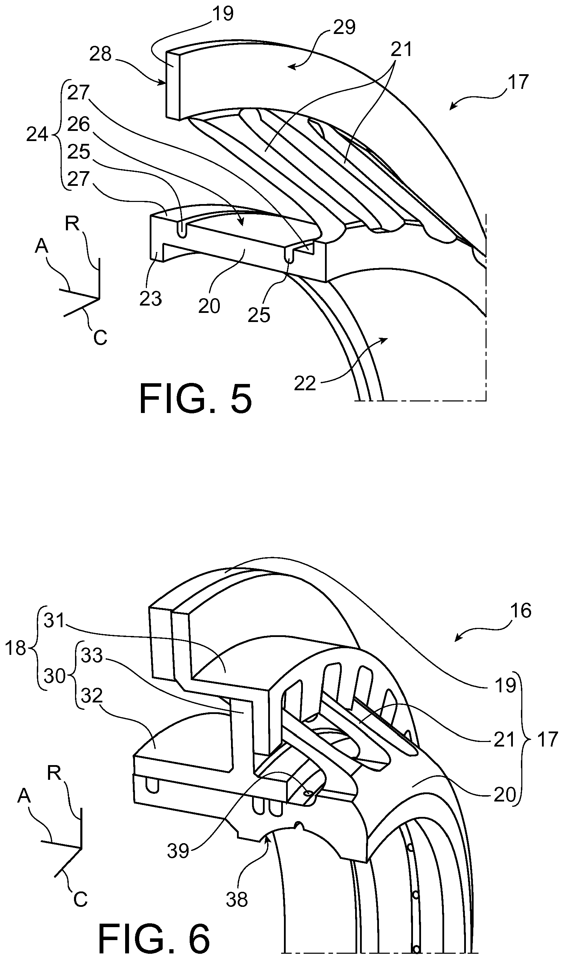

L'invention se rapporte à un dispositif d'amortissement 16 d'un tel palier à roulement 15, dont deux modes de réalisation sont donnés en exemple aux figures 3 et 6. Bien entendu, le dispositif d'amortissement 16 de l'invention peut être mis en oeuvre dans d'autres machines rotatives ou pour amortir tout autre palier à roulement de turbomachine.

Dans chacune des figures 3 à 6, un repère orthogonal indique des directions axiale A, radiale R et circonférentielle C.

Sur ces figures, seul un tronçon circonférentiel de chacune des pièces est représenté, étant entendu que chacune de ces pièces s'étend circonférentiellement autour d'un axe de révolution de manière à former une pièce annulaire.

Par convention, les parties du dispositif 16 situées vers la gauche des figures 3 à 6 selon la direction axiale A forment des parties amont tandis que celles situées vers la droite de ces figures selon la direction axiale A forment des parties aval.

Lorsque le dispositif d'amortissement 16 est monté sur le palier à roulement 15 du système d'entraînement d'accessoires 1 de la figure 2, cet axe de révolution coïncide avec l'axe longitudinal A1 le long duquel s'étend l'arbre 2.

Il est tout d'abord décrit ci-après un premier mode de réalisation illustré aux figures 3 à 5.

Le dispositif d'amortissement 16 comprend une cage 17 et un support annulaire 18.

En référence à la figure 5, la cage 17 comprend un anneau de fixation 19, une bague 20 et des colonnettes 21.

Dans ce mode de réalisation, la bague 20 est configurée pour être montée sur une bague externe d'un roulement, par exemple le roulement du palier 15 de la figure 2.

A cet effet, la bague 20 comprend une face radialement interne 22 configurée pour épouser la face radialement externe de ladite bague externe du roulement.

Afin de limiter le déplacement axial de la bague externe du roulement par rapport à la bague 20, cette dernière comprend de préférence des butées axiales agencées en deux extrémités axiales de cette bague 20.

Dans l'exemple de la figure 5, la bague 20 comprend en son extrémité axiale amont un épaulement 23 formant une butée axiale amont pour la bague externe du roulement. Cette butée axiale amont 23 permet de limiter un déplacement axial de la bague externe du roulement par rapport à la bague 20 dans un premier sens allant de l'aval vers l'amont selon la direction axiale A.

Pour limiter un déplacement axial de la bague externe du roulement par rapport à la bague 20 dans un deuxième sens opposé audit premier sens, c'est-à-dire de l'amont vers l'aval, le dispositif d'amortissement 16 comprend par exemple un anneau de retenue (non représenté) fixé sur la face radialement interne 22 de la bague 20 en son extrémité axiale aval.

L'épaulement 23 et l'anneau de retenue permettent ainsi d'enserrer axialement la bague externe du roulement de manière à solidariser cette bague externe de roulement avec la bague 20 de la cage 17.

Le maintien axial de la bague externe du roulement par rapport à la bague 20 de la cage 17 peut être réalisé par d'autres moyens. Par exemple, dans un mode de réalisation non représenté, un anneau de retenue supplémentaire peut être fixé sur la face radialement interne 22 de la bague 20 en son extrémité axiale amont, en lieu et place de l'épaulement 23. Pour autre exemple, un épaulement peut être réalisé sur la bague 20 en son extrémité aval et un anneau de retenue peut être fixé à la bague 20 en son extrémité amont.

Par ailleurs, la fixation du ou des anneaux de retenue peut être réalisée par tout moyen conventionnel, par exemple à l'aide de vis traversant le ou les anneaux de retenue et reçues dans des trous filetés correspondants de la bague 20, et/ou par coopération d'un filetage externe du ou des anneaux de retenue avec un filetage interne de la bague 20 (modes de réalisation non représentés).

Radialement à l'opposé de la face interne 22, la bague 20 comprend une face radialement externe 24 comprenant deux gorges circonférentielles 25 axialement espacées l'une par rapport à l'autre.

Cette face radialement externe 24 comprend une portion de contact fluidique 26 délimitée axialement par les deux gorges circonférentielles 25 et deux portions d'appui 27 chacune étant délimitée axialement par l'une de ces gorges circonférentielles 25. Les portions d'appui 27 sont donc situées aux extrémités axiales amont et aval, respectivement, de la bague 20.

La portion de contact fluidique 26 est destinée à délimiter une cavité d'amortissement fluidique (voir plus loin ci-dessous).

Concernant l'anneau de fixation 19 de la cage 17, celui-ci présente un diamètre intérieur supérieur au diamètre extérieur de la bague 20, de sorte que l'anneau de fixation 19 s'étende radialement à l'extérieur de la bague 20 et à distance de celle-ci. Cette différence de diamètre est notamment déterminée en fonction de la plage de déformation radiale souhaitée des colonnettes 21 (voir plus loin ci-dessous).

L'anneau de fixation 19 de la cage 17 comprend une face axialement amont 28 et une face axialement aval 29 définissant une épaisseur de cet anneau 19. Les faces axialement amont 28 et aval 29 sont chacune sensiblement parallèles à la direction radiale R de sorte que cet anneau 19 puisse être plaqué par sa face axialement amont 28 contre une face d'un bâti sensiblement perpendiculaire à l'axe de révolution de la cage 17. La cage 17 peut ainsi être fixée à un tel bâti par tout moyen conventionnel, par exemple à l'aide de vis (voir plus loin ci-dessous).

Dans cet exemple, l'anneau de fixation 19 de la cage 17 est situé au droit de l'extrémité axiale amont de la bague 20.

L'anneau de fixation 19 est relié à la bague 20 par les colonnettes 21. Dans cet exemple, chaque colonnette 21 comprend à cet effet une première extrémité reliée à l'extrémité axiale aval de la bague 20 et une deuxième extrémité reliée à l'anneau de fixation 19. Compte tenu de la position radiale relative de l'anneau de fixation 19 et de la bague 20, les colonnettes 21 s'étendent chacune à la fois axialement et radialement, c'est-à-dire obliquement par rapport à l'axe de révolution de la cage 17.

Les colonnettes 21 sont circonférentiellement espacées les unes des autres de sorte que, pour chaque paire de colonnettes 21 circonférentiellement contiguës, celles-ci définissent entre elles une ouverture intercolonnette.

La cage 17 est ainsi ajourée par les ouvertures intercolonnettes, ce qui confère à a cage une certaine souplesse radiale. De manière connue en soi, les colonnettes 21 sont en effet dimensionnées pour se déformer radialement sous l'action d'un effort radial prédéterminé de manière à autoriser un déplacement radial de la bague 20 par rapport à l'anneau de fixation 19. Ce déplacement radial est ici limité radialement vers l'extérieur par le support annulaire 18 (voir ci-après).

En référence aux figures 3 et 4, le support annulaire 18 comprend une couronne dentée 30 et une pièce de fixation 31.

La couronne dentée 30 comprend une base annulaire 32 portant une pluralité de dents 33 qui s'étendent chacune radialement au travers d'une ouverture intercolonnette respective de la cage 17 (voir figure 4).

La base annulaire 32 de cette couronne dentée 30 comprend une face radialement interne 34 ayant deux extrémités axiales respectivement en appui sur lesdites portions d'appui 27 de la face radialement externe 24 de la bague 20.

La face radialement interne 34 de la couronne dentée 30 comprend une portion de contact fluidique axialement entre les portions d'appui de cette face 34.

Lorsque la cage 17 et le support annulaire 18 sont assemblés l'un avec l'autre, ladite cavité d'amortissement fluidique est délimitée radialement d'une part par la portion de contact fluidique 26 définie par la face radialement externe 24 de la bague 20 de la cage 17 et, d'autre part, par la portion de contact fluidique 34 définie par la face radialement interne 34 de la couronne dentée 30 du support annulaire 18. Axialement, cette cavité d'amortissement fluidique est délimitée par les gorges circonférentielles 25 réalisée dans la bague 20 de la cage 17.

Ainsi, la cage 17 et le support annulaire 18 forment radialement entre eux une cavité d'amortissement fluidique apte à former un film circonférentiel de fluide comprimé, ce fluide étant typiquement de l'huile.

L'acheminement de l'huile dans la cavité d'amortissement fluidique est réalisé par tout moyen conventionnel, par exemple à l'aide d'un ou plusieurs canaux et/ou orifices réalisés dans le support annulaire 18, en particulier dans la couronne dentée 30 et/ou dans la pièce de fixation 31 de ce support annulaire 18.

Dans cet exemple, la bague 20 de la cage 17 est usinée de sorte que le diamètre de sa face externe 24 au niveau de la portion de contact fluidique 26 soit inférieur au diamètre de cette face externe 24 au niveau des portions d'appui 27, afin de définir une épaisseur du film de fluide comprimé. Typiquement, la différence entre ces diamètres peut être comprise entre 0,15 mm et 0,4 mm.

Bien entendu, le mode de réalisation qui vient d'être décrit n'est aucunement limitatif, la cavité d'amortissement fluidique pouvant présenter une géométrie différente, pourvue que celle-ci soit formée radialement entre la bague 20 de la cage 17 et le support annulaire 18.

En référence à la figure 4, la couronne dentée 30 est par ailleurs dimensionnée de sorte que sa dimension radiale soit inférieure ou sensiblement inférieure à ladite différence entre le diamètre intérieur de l'anneau de fixation 19 de la cage 17 et le diamètre extérieur de la bague 20 de cette cage 17. En effet, comme cela se déduit du procédé d'assemblage décrit ci-dessous, la couronne dentée 30 doit pouvoir être insérée dans la cage 17 par translation axiale relative de ces pièces en faisant passer la couronne dentée 30 radialement entre l'anneau de fixation 19 et la bague 20.

La pièce de fixation 31 du support annulaire 18 réalise dans cet exemple une double fonction de maintien axial et de limitation du déplacement radial de la couronne dentée 30 par rapport au bâti.

En référence à la figure 3, la pièce de fixation 31 comprend dans cet exemple trois parties amont 35, intermédiaire 36 et aval 37 formant dans un plan de coupe transversale un « S ».

La partie amont 35 est une partie de fixation venant en appui contre ladite face axialement aval 29 de l'anneau de fixation 19 de la cage 17. La cage 17 et la pièce de fixation 31 du support annulaire 18 peuvent ainsi être fixé audit bâti à l'aide de moyens de fixation communs tels que des vis.

La partie intermédiaire 36 de la pièce de fixation 31 forme une butée radiale pour la bague 20 de la cage 17. En effet, la pièce de fixation 31 et la couronne dentée 30 sont fixées l'une à l'autre de sorte que ces pièces soient solidaires l'une de l'autre à la fois radialement, axialement et circonférentiellement (voir ci-après pour les moyens de fixation). Dans cet exemple, la pièce de fixation 31 et la couronne dentée 30 sont fixées l'une à l'autre dans une position dans laquelle une face radialement externe des dents 33 de la couronne dentée 30 est en appui contre une face radialement interne de la partie intermédiaire 36 de la pièce de fixation 31.

La partie aval 37 comprend dans cet exemple des pattes qui sont chacune en appui contre une face aval d'une dent 33 respective de la couronne dentée 30. De préférence, des vis (non représentées) sont utilisées pour fixer les pattes 37 contre les dents 33.

Le support annulaire 18 forme ainsi une butée radiale limitant le déplacement de la cage 17 radialement vers l'extérieur et permettant l'alimentation en huile du palier et en particulier de la cavité d'amortissement fluidique.

L'assemblage d'un tel dispositif d'amortissement 16 comprend notamment une étape d'emboîtement de la couronne dentée 30 sur la bague 20 de la cage 17 par translation axiale de cette couronne dentée 30 par rapport à la bague 20 de manière à insérer chaque dent 33 de la couronne dentée 30 dans une ouverture intercolonnette respective de la cage 17.

Après positionnement de la couronne dentée 30 et de la bague 20 selon la configuration illustrée à la figure 4, il est réalisé une étape de fixation de la pièce de fixation 31 et de la couronne dentée 30 l'une à l'autre.

La description qui suit se rapporte au deuxième mode de réalisation illustré à la figure 6. Cette description se limite aux différences entre le premier et le deuxième mode de réalisation.

Dans l'exemple de la figure 6, la bague 20 de la cage 17 forme directement la bague externe du roulement qu'équipe le dispositif d'amortissement 16.

A cet effet, la bague 20 forme une piste 38 pour le roulement de billes.

Dans cet exemple, la piste 38 est située en une extrémité axiale aval de la cage 17, et plus spécifiquement en aval par rapport à la cavité d'amortissement fluidique.

Entre autres avantages, cette configuration permet notamment d'améliorer le drainage de l'espace dans lequel se déplacent les billes, par l'intermédiaire d'orifices de drainage 39 qui débouchent en aval de la couronne dentée 30.

Bien entendu, l'invention n'est pas limitée aux exemples particuliers décrits ci-dessus. Par exemple, la bague 20 du dispositif d'amortissement 16 peut être configurée pour être montée sur la périphérie d'un roulement à rouleaux ou pour former une bague externe d'un tel roulement.

## Revendications

1. Dispositif d'amortissement (16) d'un palier à roulement (15), ce dispositif (16) comprenant un support annulaire (18) et une cage (17) s'étendant axialement suivant un axe de révolution (A1), cette cage (17) comprenant :
- un anneau de fixation (19),
- une bague (20) configurée pour être montée sur la périphérie du roulement (15) ou pour former une bague externe du roulement (15),
- des colonnettes (21) reliant la bague (20) à l'anneau de fixation (19), ces colonnettes (21) s'étendant obliquement par rapport audit axe de révolution (A1) et étant circonférentiellement espacées les unes des autres de sorte que, pour chaque paire de colonnettes (21) circonférentiellement contiguës, ces colonnettes (21) définissent entre elles une ouverture intercolonnette,
la bague (20) et le support annulaire (18) formant radialement entre eux une cavité d'amortissement fluidique apte à former un film circonférentiel de fluide comprimé, ce dispositif (16) étant **caractérisé en ce que** le support annulaire (18) comprend une pluralité de dents (33) s'étendant chacune radialement au travers d'une ouverture intercolonnette respective de la cage (17), et **en ce que** le support annulaire (18) comprend une couronne dentée (30) et une pièce de fixation (31), la couronne dentée (30) portant lesdites dents (33) et délimitant ladite cavité d'amortissement fluidique, la pièce de fixation (31) étant fixée à la couronne dentée (30).

2. Dispositif (16) selon la revendication 1, dans lequel chaque colonnette (21) de la cage (17) comprend une première extrémité reliée à une première extrémité axiale de la bague (20) et une deuxième extrémité reliée à l'anneau de fixation (19) et située axialement au droit d'une deuxième extrémité axiale de la bague (20).

3. Dispositif (16) selon la revendication 1 ou 2, dans lequel la pièce de fixation (31) du support annulaire (18) est en appui contre l'anneau de fixation (19) de la cage (17).

4. Dispositif (16) selon l'une quelconque des revendications précédentes, dans lequel la pièce de fixation (31) du support annulaire (18) comprend des pattes (37) étant chacune en appui contre une dent (33) respective de la couronne dentée (30).

5. Dispositif (16) selon l'une quelconque des revendications précédentes, dans lequel la bague (20) comprend une face radialement externe (24) comprenant deux gorges circonférentielles (25) axialement espacées l'une par rapport à l'autre, cette face radialement externe (24) comprenant une portion de contact fluidique (26) délimitée axialement par les deux gorges circonférentielles (25) et deux portions d'appui (27) chacune étant délimitée axialement par l'une de ces gorges circonférentielles (25), et dans lequel le support annulaire (18) comprend une face radialement interne (34) ayant deux extrémités axiales respectivement en appui sur lesdites portions d'appui (27) de la face radialement externe (24) de la bague (20), cette face radialement interne (34) comprenant une portion de contact fluidique axialement entre les portions d'appui de cette face (34), ladite cavité d'amortissement fluidique étant délimitée radialement par les portions de contact fluidique respectives de la bague (20) et du support annulaire (18), et axialement par lesdites gorges circonférentielles (25) de la bague (20).

6. Palier comprenant un dispositif (16) selon l'une quelconque des revendications précédentes et un roulement à billes (15) ou à rouleaux, la bague (20) de la cage (17) étant configurée pour être montée sur une bague externe de ce roulement (15).

7. Palier comprenant un dispositif (16) selon l'une quelconque des revendications précédentes, une bague interne et des éléments roulants tels que des billes ou des rouleaux, la bague (20) de la cage (17) formant une bague externe constituant avec la bague interne et les éléments roulants un roulement.

8. Turbomachine d'aéronef, comprenant un système d'entraînement d'accessoires (1), ce système d'entraînement d'accessoires (1) comprenant un dispositif de prélèvement de puissance (3) d'un arbre (2) de la turbomachine, ce dispositif de prélèvement de puissance (3) comprenant un palier selon la revendication 6 ou 7.

9. Procédé d'assemblage d'un dispositif (16) selon l'une quelconque des revendications 1 à 5, ce procédé comprenant :
- une étape d'emboîtement de la couronne dentée (30) sur la bague (20) par translation axiale de la couronne dentée (30) par rapport à la bague (20) de manière à insérer chaque dent (33) de la couronne dentée (30) dans une ouverture intercolonnette respective de la cage (17) ;
- une étape de fixation de la pièce de fixation (31) à la couronne dentée (30).

## Patentansprüche

1. Vorrichtung zur Dämpfung (16) eines Wälzlagers (15), wobei diese Vorrichtung (16) einen ringförmigen Träger (18) umfasst und ein Gehäuse (17), das sich axial entlang einer Rotationsachse (A1) erstreckt, wobei dieses Gehäuse (17) umfasst:
- einen Befestigungsring (19),
- eine Büchse (20), die konfiguriert ist, um am Umfang des Lagers (15) montiert zu werden oder um eine externe Büchse des Lagers (15) zu bilden,
- Säulen (21), die die Büchse (20) mit dem Befestigungsring (19) verbinden, wobei sich diese Säulen (21) schräg zur Rotationsachse (A1) erstrecken und umfangsmäßig voneinander beabstandet sind, so dass, für jedes Paar von Säulen (21), die umfangsmäßig zusammenhängend sind, diese Säulen (21) untereinander eine Zwischensäulenöffnung definieren,
wobei die Büchse (20) und der ringförmige Träger (18) radial zwischen sich einen Hohlraum zur fluidischen Dämpfung bilden, der dazu geeignet ist, einen umlaufenden Film aus komprimiertem Fluid zu bilden, wobei diese Vorrichtung (16) **dadurch gekennzeichnet ist, dass** der ringförmige Träger (18) eine Vielzahl von Zähnen (33) umfasst, die sich jeweils radial durch eine jeweilige Zwischensäulenöffnung des Gehäuses (17) hindurch erstrecken, und dass der ringförmige Träger (18) einen Zahnkranz (30) und ein Befestigungsstück (31) umfasst, wobei der Zahnkranz (30) die Zähne (33) trägt und den Hohlraum zur fluidischen Dämpfung begrenzt, wobei das Befestigungsstück (31) am Zahnkranz (30) befestigt ist.

2. Vorrichtung (16) nach Anspruch 1, wobei jede Säule (21) des Gehäuses (17) ein erstes Ende umfasst, das mit einem ersten axialen Ende des Büchse (20) verbunden ist, und ein zweites Ende, das mit dem Befestigungsring (19) verbunden ist und axial rechtwinklig von einem zweiten axialen Ende der Büchse (20) angeordnet ist.

3. Vorrichtung (16) nach Anspruch 1 oder 2, wobei das Befestigungsstück (31) des ringförmigen Trägers (18) gegen den Befestigungsring (19) des Gehäuses (17) anliegt.

4. Vorrichtung (16) nach einem der vorhergehenden Ansprüche, wobei das Befestigungsstück (31) des ringförmigen Trägers (18) Laschen (37) umfasst, die jeweils an einem jeweiligen Zahn (33) des Zahnkranzes (30) anliegen.

5. Vorrichtung (16) nach einem der vorhergehenden Ansprüche, wobei die Büchse (20) eine radial externe Seite (24) umfasst, die zwei umlaufende Nuten (25) umfasst, die axial voneinander beabstandet sind, wobei diese radial externe Seite (24) einen Abschnitt mit fluidischem Kontakt (26) umfasst, der axial durch die zwei umlaufende Nuten (25) begrenzt ist, und zwei Anliegeabschnitte (27), die jeweils axial durch eine dieser umlaufende Nuten (25) begrenzt sind, und wobei der ringförmige Träger (18) eine radiale innere Seite (34) umfasst, die zwei axiale Enden aufweist, die jeweils an den Anliegeabschnitten (27) der radialen externen Seite (24) der Büchse (20) anliegen, wobei diese radiale innere Seite (34) einen Abschnitt mit axialem fluidischem Kontakt zwischen den Anliegeabschnitten dieser Seite (34) umfasst, wobei der Hohlraum zur fluidischen Dämpfung radial durch die jeweiligen Abschnitte mit fluidischem Kontakt der Büchse (20) und des ringförmigen Trägers (18) begrenzt ist, und axial durch die umlaufenden Nuten (25) der Büchse (20).

6. Lager, eine Vorrichtung (16) nach einem der vorhergehenden Ansprüche umfassend und ein Kugel- oder Wälzlager (15), wobei die Büchse (20) des Gehäuses (17) konfiguriert ist, um an einer externen Büchse dieses Lagers (15) montiert zu werden.

7. Lager, das eine Vorrichtung (16) nach einem der vorhergehenden Ansprüche, eine innere Büchse und Wälzkörper wie Kugeln oder Rollen umfasst, wobei die Büchse (20) des Gehäuses (17) eine externe Büchse bildet, die mit der inneren Büchse und den Wälzkörpern ein Lager ausmachen.

8. Turbomaschine eines Luftfahrzeugs, ein Zubehörantriebssystem (1) umfassend, wobei dieses Zubehörantriebssystem (1) eine Vorrichtung zur Leistungsentnahme (3) von einer Welle (2) der Turbomaschine umfasst, wobei diese Vorrichtung zur Leistungsentnahme (3) ein Lager nach Anspruch 6 oder 7 umfasst.

9. Verfahren zum Zusammenbau einer Vorrichtung (16) nach einem der Ansprüche 1 bis 5, wobei dieses Verfahren umfasst:
- einen Schritt der Einpassung des Zahnkranzes (30) in die Büchse (20) durch axiale Verschiebung des Zahnkranzes (30) relativ zur Büchse (20), so dass jeder Zahn (33) des Zahnkranzes (30) in eine jeweilige Zwischensäulenöffnung des Gehäuses (17) eingeführt wird;
- einen Schritt der Befestigung des Befestigungsstücks (31) am Zahnkranz (30).

## Claims

1. Device (16) for damping a rolling bearing (15), this device (16) comprising an annular support (18) and a cage (17) extending axially along an axis of revolution (A1), this cage (17) comprising:
- a fastening ring (19),
- a ring (20) configured to be mounted on the periphery of the bearing (15) or to form an outer ring of the bearing (15),
- stanchions (21) connecting the ring (20) to the fastening ring (19), these stanchions (21) extending obliquely with respect to said axis of revolution (A1) and being circumferentially spaced apart from one another such that, for each pair of circumferentially contiguous stanchions (21), these stanchions (21) define an inter-stanchion opening therebetween,
the ring (20) and the annular support (18) forming radially therebetween a fluidic damping cavity capable of forming a circumferential compressed fluid film, this device (16) being **characterised in that** the annular support (18) comprises a plurality of teeth (33) each extending radially through a respective inter-stanchion opening of the cage (17), and **in that** the annular support (18) comprises a crown gear (30) and a fastening part (31), the crown gear (30) bearing said teeth (33) and delimiting said fluidic damping cavity, the fastening part (31) being fastened to the crown gear (30).

2. Device (16) according to claim 1, wherein each stanchion (21) of the cage (17) comprises a first end connected to a first axial end of the ring (20) and a second end connected to the fastening ring (19) and located axially next to a second axial end of the ring (20).

3. Device (16) according to claim 1 or 2, wherein the fastening part (31) of the annular support (18) bears against the fastening ring (19) of the cage (17).

4. Device (16) according to any preceding claims, wherein the fastening part (31) of the annular support (18) comprises tabs (37) each bearing against a respective tooth (33) of the crown gear (30).

5. Device (16) according to any preceding claims, wherein the ring (20) comprises a radially outer face (24) comprising two circumferential grooves (25) axially spaced apart from one another, this radially outer face (24) comprising a fluidic contact portion (26) delimited axially by the two circumferential grooves (25) and two bearing portions (27) each being delimited axially by one of these circumferential grooves (25), and wherein the annular support (18) comprises a radially inner face (34) having two axial ends respectively bearing on said bearing portions (27) of the radially outer face (24) of the ring (20), this radially inner face (34) comprising a fluidic contact portion axially between the bearing portions of this face (34), said fluidic damping cavity being delimited radially by the respective fluidic contact portions of the ring (20) and of the annular support (18), and axially by said circumferential grooves (25) of the ring (20).

6. Bearing comprising a device (16) according to any preceding claims and a ball or roller bearing (15), the ring (20) of the cage (17) being configured to be mounted on an outer ring of this bearing (15).

7. Bearing comprising a device (16) according to any preceding claims, an inner ring and rolling elements such as balls or rollers, the ring (20) of the cage (17) forming an outer ring establishing a bearing with the inner ring and the rolling elements.

8. Aircraft turbine engine, comprising an accessory drive train (1), this accessory drive train (1) comprising a device for drawing power (3) from a shaft (2) of the turbine engine, this device for drawing power (3) comprising a bearing according to claim 6 or 7.

9. Method for assembling a device (16) according to any one of claims 1 to 5, including the features of claim 3, this method comprising:
- a step of interlocking the crown gear (30) on the ring (20) by axial translation of the crown gear (30) with respect to the ring (20) so as to insert each tooth (33) of the crown gear (30) into a respective inter-stanchion opening of the cage (17);
- a step of fastening the fastening part (31) to the crown gear (30).
